# Europäisches Patentamt

# European Patent Office

# Office européen des brevets

(11) Veröffentlichungsnummer: **0 224 277**
**B1**

(12) **EUROPÄISCHE PATENTSCHRIFT**

(45) Veröffentlichungstag der Patentschrift:
**08.11.89**

(51) Int. Cl.⁴: **C22B 60/02**, G21C 19/46,
C01G 56/00

(21) Anmeldenummer: **86117772.3**

(22) Anmeldetag: **28.06.83**

(60) Veröffentlichungsnummer der früheren Anmeldung
nach Art. 76 EPÜ: **0098510**

(54) Verfahren zur selektiven Trennung des Plutoniums von Uran und anderen Metallen.

(30) Priorität: **02.07.82 DE 3224803**

(43) Veröffentlichungstag der Anmeldung:
**03.06.87 Patentblatt 87/23**

(45) Bekanntmachung des Hinweises auf die Patenterteilung:
**08.11.89 Patentblatt 89/45**

(84) Benannte Vertragsstaaten:
**BE DE FR GB**

(56) Entgegenhaltungen:
**EP-A- 0 004 953
FR-A- 2 158 058
GB-A- 911 792
US-A- 2 992 888
US-A- 3 000 695
US-A- 3 158 614
US-A- 4 464 343**

(73) Patentinhaber: **KERNFORSCHUNGSZENTRUM KARLSRUHE GMBH, Weberstrasse 5 Postfach 3640, D-7500 Karlsruhe 1(DE)**

(72) Erfinder: **Heckmann, Klaus, Prof. Dr., Zum Aichahof 20, D-8400 Regensburg(DE)**
Erfinder: **Spurny, Jiri, Dr., Alfons-Auer-Strasse 16b, D-8400 Regensburg(DE)**

**Beschreibung**

Die Erfindung betrifft ein Verfahren zur selektiven Trennung von Plutonium and Uran.

Die gemeinsame Abtrennung von Plutonium und Uran von anderen Elementen und die Abtrennung des Plutoniums vom Uran erfolgt heutzutage fast ausschließlich aus wäßrigen Lösungen. Hier haben sich zwei Verfahren durchgesetzt, deren jedes in mehreren Varianten angewendet wird: das Flüssig-Extraktionsverfahren und das Ionenaustauschverfahren. Beide Verfahren lassen sich zwar grundsätzlich handhaben - auch in großtechnischem Maßstab - weisen aber noch unerwünschte Nachteile auf:

- Relativ lange Verweilzeiten von organischen Lösungsmitteln, Komplexbildnern oder Harzen in Gebieten höherer Strahlungsdichte führen zu radiolytischer Zerstörung und damit zu Kapazitätsverlusten und zu störenden Gasentwicklungen.

- Bei den Flüssig-Extraktionsverfahren bereiten sowohl der Durchtritt von $UO_2^{2+}$ und $Pu^{4+}$ durch die Phasengrenze zwischen Wasser und organischem Solvens, als auch die Anreicherung von Niederschlägen an dieser Phasengrenze kinetische Probleme.

- Bei Anwendung der Mixer/Settler-Technik im Zuge der Flüssigextraktion wird die stationäre Prozeßführung durch Dichteschwankungen in der organischen und der wäßrigen Phase während sukzessiver Extraktions- und Reextraktionsschritte erschwert.

- Die Reaktion von Ionenaustauscherharzen und Komplexbildnern ( z. B. Tributylphosphat) mit konzentrierter $HNO_3$ bedeutet ein unnötiges Gefahrenpotential.

- Die Trennschärfe der Flüssigextraktionsverfahren und der Ionenaustauschverfahren bei der Separierung des Urans vom Plutonium und bei der Separierung beider Elemente von anderen Elementen ist so niedrig, daß die Separierung in mehreren hintereinander geschalteten Stufen erfolgen muß.

Diese Schwierigkeiten treten bereits in relativ gut definierten Lösungen auf, wie sie z. B. beim Auflösen von Kernbrennelementen in konzentrierter $HNO_3$ anfallen. Es kommen zusätzliche Schwierigkeiten in der Prozeßführung hinzu, wenn uneinheitliche Lösungen aufgearbeitet werden müssen, die evtl. noch schlecht definiertes organisches Material schwankender Zusammensetzung enthalten. Für solche Abwässer existieren derzeit keine ganz befriedigenden Aufbereitungsverfahren, so daß auch die Rückgewinnung von Kernbrennmaterial aus solchen Abwässern und der Transport und die Lagerung der verbleibenden Rückstände noch nicht zufriedenstellend gelöst sind.

Es besteht darum ein Bedarf an neuen oder verbesserten Verfahren für die Separierung von Uran und Plutonium, welche die o. g. Nachteile nicht oder in gemilderter Form aufweisen. Der Anmelder hat darum geprüft, ob sich Plutonium aus wäßrigen Lösungen entweder als Kation oder als komplexes Anion durch entweder anionische oder kationische Tenside als schwerlöslicher Niederschlag ausfällen und auf diese Weise selektiv von Uran oder anderen Elementen abtrennen läßt; er hat auch untersucht, ob die Fällung von Plutonium mit Tensiden zu hydrophoben Niederschlägen führt, die sich mit Hilfe der Ionen- bzw. Präzipitatflotation schnell aus den Mutterlaugen entfernen lassen.

In der DE-AS 11 66 113 wird ein Flotationsverfahren für anorganische Ionen beschrieben, bei dem je nach der Ladung des zu flotierenden Ions ein anionischer oder kationischer Sammler zu der ionenhaltigen Lösung zugegeben wird und bei dem dann das sich bildende, unlösliche Reaktionsprodukt unter Einblasen von Gas aufgeschwämmt und als Schaum ausgetragen wird. Nach diesem Verfahren läßt sich das Uran aus Lösungen von Uranylsulfat abtrennen, wenn auch mit schlechter Ausbeute.

In der DE-PS 28 17 029 wird ein Verfahren zur selektiven Trennung des Urans von seinen Begleitmetallen und zu seiner Gewinnung beschrieben, demzufolge man zu einer wäßrigen Uranlösung Salzsäure in einer solchen Menge zugibt, daß das $UO_2^{2+}$ anionische Chlorokomplexe bildet, ein kationisches Tensid hinzufügt, den dadurch entstehenden Niederschlag in einer Flotationszelle flotiert und das Uran aus dem ausflotierten Präzipitat gewinnt. Dieses Verfahren gestattet zwar die Urangewinnung in größerer Ausbeute und mit höherer Anreicherung als das Verfahren gemäß DE-AS 11 66 113, es operiert aber auf der Basis von Salzsäure und kann darum aus Gründen der Korrosion nicht ohne zusätzliche Schutzmaßnahmen in größerem Stil eingesetzt werden.

In der DE-PS 29 02 516 wird das in DE-PS 28 17 029 beschriebene Verfahren auch auf schwefelsäurehaltige Lösungen ausgedehnt. Dabei werden Ausbeuten und Anreicherungen von Uran erzielt, die denen wesentlich überlegen sind, wie sie in der DE-AS 11 66 113 genannt werden. Die Flotationsdauer ist länger und die Anreicherung ist geringer als nach dem Verfahren gemäß DE-PS 28 17 029; dafür ist jedoch die Korrosionsgefährdung geringer.

Hinweise darauf, wie man Plutonium von Uran mittels Tensidfällung trennen kann, finden sich in den o. g. Literaturstellen nicht.

Der vorliegenden Erfindung liegt somit die Aufgabe zugrunde, ein einfaches Verfahren zur Abtrennung von Plutonium und Uran zur Verfügung zu stellen, das für die Rückgewinnung von Plutonium aus Kernkraftwerkabbränden und anderen radioaktiven Abfällen geeignet ist und die Nachteile der bekannten Verfahren nicht besitzt. Bei dem erfindungsgemäßen Verfahren soll die Expositionszeit des organischen Materials in Gebieten hoher Strahlungsdichte verringert und die Menge des verwendeten organischen Materials so gering wie möglich gehalten werden. Das erfindungsgemäße Verfahren soll ausschließlich in wäßrigem Milieu ablaufen, da dadurch die Probleme der Phasendurchtrittskinetik und der Dichteschwankungen in Zwei-Phasen-Systemen vermieden werden.

Der Anmelder hat in Fortführung der Arbeiten zur flotativen Isolierung und Anreicherung von $UO_2^{2+}$ aus homogenen wäßrigen Lösungen mit Hilfe von kationischen Tensiden, die in der DE-PS 28 17 029 beschrieben sind, die Möglichkeit überprüft, dieses Verfahren zur Isolierung und Anreicherung

von Pu⁴⁺ zu verwenden. Dabei ging er von dem bekannten Befund aus, daß Pu⁴⁺ und U⁴⁺ zur Bildung von Sulfatokomplexen befähigt sind und darum die wesentlichste Voraussetzung für die Präzipitatflotation mit kationischen Tensiden erfüllen.

Außerordentlich überraschend war, daß die für die Fällung verwendeten kationischen Tenside, speziell die Alkylpyridiniumsalze, eine sehr hohe Stabilität gegenüber dem Einfluß radioaktiver Strahlung besitzen. So hatten Bestrahlungsdosen bis zu $10^6$ rd keinen nachweisbaren Einfluß auf die Fällungseigenschaften des Cetylpyridinium-Kations. Erst bei $10^8$ rd war ein signifikanter Rückgang des Fällungsvermögens um rund 30 % zu verzeichnen.

Erfindungsgemäß wird somit ein einfacher und hochselektiver Prozeß zur Trennung von Pu⁴⁺ und von $UO_2^{2+}$ und zur Rückgewinnung beider Ionen aus wäßrigen Lösungen zur Verfügung gestellt. Bei dem erfindungsgemäßen Verfahren ist es weder erforderlich, ein organisches Lösungsmittel noch Ionenaustauscherharze zu verwenden. Man verwendet sehr strahlungsstabile Reagenzien, deren Verweilzeit in der Lösung außerdem vergleichsweise kurz ist.

In schwefelsauren und sulfathaltigen Lösungen bilden sowohl Pu⁴⁺ als auch $UO_2^{2+}$ mit kationischen Tensiden schwerlösliche Niederschläge. Darum lassen sich in schwefelsauren und/oder sulfathaltigen Lösungen Pu⁴⁺ und $UO_2^{2+}$ entweder einzeln oder gemeinsam von allen Begleitmetallen quantitativ abtrennen, die in diesen Lösungen keine oder weniger stabile Sulfatokomplexe als Pu⁴⁺ und $UO_2^{2+}$ bilden und bei Zugabe kationischer Tenside nicht ausfallen.

Die Aufgabe wird erfindungsgemäß dadurch gelöst, daß man die folgenden zwei Stufen durchführt:

a) zu einer Pu⁴⁺ als auch $UO_2^{2+}$ enthaltenden Lösung wird soviel Schwefelsäure hinzugegebem, daß sowohl Pu⁴⁺ als auch $UO_2^{2+}$ anionische Sulfatokomplexe bilden, dann Eisen-(II)-sulfat oder ein anderes Reduktionsmittel in einer Menge zugesetzt, die ausreicht, das vorhandene Pu⁴⁺ zu Pu³⁺ zu reduzieren, danach ein kationisches Tensid hinzugefügt, der dadurch entstehende uranhaltige Niederschlag aus seiner Mutterlauge in an sich bekannter Weise abgetrennt und das Uran aus dem Niederschlag in bekannter Weise gewonnen; und

b) nach der Abtrennung des uranhaltigen Niederschlags wird zu der verbleibenden Mutterlauge entweder Natriumnitrit oder ein Peroxodisulfat oder ein anderes Oxidationsmittel in einer solchen Menge hinzugefügt, daß dadurch das Pu³⁺ wiederum oxidiert wird, erneut ein kationisches Tensid hinzugefügt, der dadurch entstehende plutoniumhaltige Niederschlag in an sich bekannter Weise abgetrennt und aus dem Niederschlag das Plutonium gewonnen.

Anstelle des Reduktionsmittels in Stufe a) und/oder des Oxidationsmittels in Stufe b) lassen sich auch entsprechende elektrolytische Prozesse verwenden.

In einer sulfathaltigen Lösung beider Metalle reduziert man das Pu⁴⁺ zu Pu³⁺ und fällt das $UO_2^{2+}$ als schwerlöslichen Komplex mit einem kationischen Tensid aus. Nach Reoxidation des Pu³⁺ zu Pu⁴⁺ fällt man danach auch das Pu⁴⁺.

Bereits beim ersten Verfahrensschritt kann soviel kationisches Tensid hingefügt werden, daß es auch für die Fällung von Plutonium im zweiten Verfahrensschritt ausreicht. Als Tensid werden langkettige Alkylpyridiniumsalze, Alkylamine oder deren Salze, Alkyldimethylnaphthylammoniumsalze, alkylierte Arylamine oder deren Salze, alkyliertes Morpholin oder dessen Salze, oxalkyliertes Pyridin oder dessen Salze, alkyliertes Chinolin oder dessen Salze oder Gemische dieser Verbindungen verwendet, wobei es sich bei den langkettigen Alkylresten um gerade oder verzweigte Ketten von 4 bis 24 Kohlenstoffatomen handelt. Besonders vorteilhaft ist es, wenn man als Tensid ein N-Cetylpyridiniumsalz oder ein N-Octadecylpyridiniumsalz verwendet. Das Tensid kann in der 1- bis 10-fachen äquivalenten Menge angewendet werden.

Das Tensid wird optimal in etwas höheren als den stöchiometrischen Konzentrationen zugegeben (ewa 1,01- bis 1,05-fach). Gibt man wesentlich mehr Tensid hinzu, so bekommt man natürlich mehr Metall in den Niederschlag, es kommt aber zu unnötig intensiver Schaumentwicklung und zur Verlängerung des Flotationsprozesses. Außerdem verschlechtern sich die Flotationseigenschaften des Niederschlags.

Eine vorteilhafte Ausbildung des erfindungsgemäßen Verfahrens ist dadurch gekennzeichnet, daß die Abtrennung der uran- bzw. plutoniumhaltigen Niederschläge durch ein Flotationsverfahren erfolgt, daß dabei mehrere Flotationszellen verwendet werden, die in Reihe und/oder parallel geschaltet sind, daß man zum Aufschäumen ein Inertgas (wie Stickstoff) oder Luft verwendet, daß man den abflotierten niederschlaghaltigen Schaum weitgehend entwässert, den Niederschlag in wenig Wasser suspendiert, die Suspension erwärmt, so daß der Niederschlag in Lösung geht, sodann aus der Lösung das Pu⁴⁺ bzw. das $UO_2^{2+}$ durch Erhöhung des pH-Wertes als Plutonat bzw. Uranat ausfällt, den Niederschlag abtrennt und das tensidhaltige Filtrat in den Flotationsprozeß rezirkuliert. Die aufzubereitenden Lösungen enthalten neben Uran und Plutonium andere Metallionen, die in diesen Lösungen entweder keine anionischen Komplexe oder aber schwächere anionische Komplexe bilden als $UO_2^{2+}$ und/oder Pu⁴⁺ und die keine schwerlöslichen Niederschläge mit kationischen Tensiden bilden. Vorteilhafterweise kann das Verfahren kontinuierlich durchgeführt werden.

Will man nicht flotieren, sondern zum Beispiel zentrifugieren oder filtrieren, so kann das Tensid auch in höherer Konzentration (1,01 bis 1,50 Äquivalente) verwendet werden. U und Pu lassen sich von der Mehrzahl der radioaktiven Spaltprodukte abtrennen, die in einem Reaktor entstehen. Die Abtrennung ist leicht, wenn die anderen Metalle keine anionischen Komplexe bilden und/oder keine anionischen Polysäuren bzw. Heteropolysäuren. Die Abtrennung von anionischen Komplexen und/oder Polysäuren gelingt aber in praktisch allen Fällen ebenfalls, wenn man entweder Ligandkonzentration ($SO_4^{2-}$) oder pH etwas variiert oder U bzw. Pu bzw. die übrigen Metalle selektiv oxidiert bzw. reduziert. So gelingt sogar die Abtrennung des Pu von Ce (das als Simulans für Pu dient und auch ein wesentliches Spaltprodukt darstellt) durch selektive Reduktion des $Ce^{4+}$ zu $Ce^{3+}$. $Ce^{3+}$ bildet mit kationischen Tensiden keine Niederschläge.

Das erfindungsgemäße Verfahren ist grundsätzlich zur Abtrennung von U und Pu aus allen Ausgangsmaterialien geeignet, die U und Pu enthalten. So wurden beide Elemente aus unspezifischen medium-active-waste (MAW)-Abwässern (des Kernforschungszentrums Karlsruhe) entfernt:

Aus Laugen, die aus naßveraschten Pu-haltigen Abfällen (Gummihandschuhe, Tiegelzangen, Handtücher, Filterpapier etc.) der Plutoniumoxidherstellung stammen. Hierbei handelt es sich um Schwefelsäurelösungen (1-2 M $H_2SO_4$), welche neben Plutonium (und ggf. Uran) noch $Al^{3+}$, $Ca^{2+}$, $Cr^{3+}$, $Cu^{2+}$, $Fe^{3+}$, $Mg^{2+}$, $Mn^{2+}$, $Ni^{2+}$, $Sn^{4+}$, $TiO^{2+}$, $Zn^{2+}$ enthalten.

Hinsichtlich der anderen Verfahrensbedingungen wird auf die DE-PS 28 17 029 verwiesen.

Das folgende Beispiel erläutert die Erfindung.

## Beispiel

Selektive Fällung von $UO_2^{2+}$ als Sulfatokomplex in Gegenwart von $Pu^{4+}$.

Es wurden 24 mg $Pu^{4+}$ und 632 mg $UO_2^{2+}$ in 75 ml einer 1,3 M $H_2SO_4$ gelöst und mit 152 mg festem $FeSO_4$ versetzt. Nach Auflösen des Salzes wurde der pH der Lösung mit Ammoniak-Wasser auf 2,5 eingestellt und die Lösung mit Wasser auf 100 ml aufgefüllt. In dieser Lösung wurden sodann 4 g festes Cetylpyridiniumchlorid gelöst. Nach einigen Minuten entstand ein gelber, feinkristalliner Niederschlag, der nach 30-minütigem Rühren abfiltriert wurde. Das Uran befand sich zu 99,46 % im Niederschlag, das Plutonium zu 97,8 % im Filtrat.

## Patentansprüche

1. Verfahren zur selektiven Trennung von Plutonium und Uran, dadurch gekennzeichnet, daß man die folgenden zwei Stufen durchführt:
a) zu einer $Pu^{4+}$ als auch $UO_2^{2+}$ enthaltenden Lösung wird soviel Schwefelsäure hinzugegeben, daß sowohl $Pu^{4+}$ als auch $UO_2^{2+}$ anionische Sulfatokomplexe bilden, dann Eisen-(II)-sulfat oder ein anderes Reduktionsmittel in einer Menge zugesetzt, die ausreicht, das vorhandene $Pu^{4+}$ zu $Pu^{3+}$ zu reduzieren, danach ein kationisches Tensid hinzugefügt, der dadurch entstehende uranhaltige Niederschlag aus seiner Mutterlauge in an sich bekannter Weise abgetrennt und das Uran aus dem Niederschlag in bekannter Weise gewonnen; und
b) nach der Abtrennung des uranhaltigen Niederschlags wird zu der verbleibenden Mutterlauge entweder Natriumnitrit oder ein Peroxodisulfat oder ein anderes Oxidationsmittel in einer solchen Menge hinzugefügt, daß dadurch das $Pu^{3+}$ wiederum oxidiert wird, erneut ein kationisches Tensid hinzugefügt, der dadurch entstehende plutoniumhaltige Niederschlag in an sich bekannter Weise abgetrennt und aus dem Niederschlag das Plutonium gewonnen.

2. Verfahren nach Anspruch 1, dadurch gekennzeichnet, daß die Reduktionsreaktion in der Stufe a) und/oder die Oxidationsreaktion in der Stufe b) elektrolytisch durchgeführt wird.

3. Verfahren nach Anspruch 2, dadurch gekennzeichnet, daß bereits beim ersten Verfahrensschritt soviel kationisches Tensid hinzugefügt wird, daß es auch für die Fällung von Plutonium im zweiten Verfahrensschritt ausreicht.

4. Verfahren nach einem der vorhergehenden Ansprüche, dadurch gekennzeichnet, daß man als Tensid langkettige Alkylpyridiniumsalze, Alkylamine oder deren Salze, Alkyldimethylnaphthylammoniumsalze, alkylierte Arylamine oder deren Salze, alkyliertes Morpholin oder dessen Salze, oxalkyliertes Pyridin oder dessen Salze, alkyliertes Chinolin oder dessen Salze oder Gemische dieser Verbindungen verwendet, wobei es sich bei den langkettigen Alkylresten um gerade oder verzweigte Ketten von 4 bis 24 Kohlenstoffatomen handelt.

5. Verfahren nach Anspruch 4, dadurch gekennzeichnet, daß man als Tensid ein N-Cetylpyridiniumsalz oder ein N-Octadecylpyridiniumsalz verwendet.

6. Verfahren nach mindestens einem der voranstehenden Ansprüche, dadurch gekennzeichnet, daß man das Tensid in der 1- bis 10-fachen äquivalenten Menge, bevorzugt jedoch in der 1,01- bis 1,10-fachen äquivalenten Menge, bezogen auf Uran bzw. Plutonium, verwendet.

7. Verfahren nach mindestens einem der voranstehenden Ansprüche, dadurch gekennzeichnet, daß die Abtrennung der uran- bzw. plutoniumhaltigen Niederschläge durch ein Flotationsverfahren erfolgt, daß dabei mehrere Flotationszellen verwendet werden, die in Reihe und/oder parallel geschaltet sind, daß man zum Aufschäumen ein Inertgas (wie Stickstoff) oder Luft verwendet, daß man den abflotierten niederschlaghaltigen Schaum weitgehend entwässert, den Niederschlag in wenig Wasser suspendiert, die Suspension erwärmt, so daß der Niederschlag in Lösung geht, sodann aus der Lösung das $Pu^{4+}$ bzw. das $UO_2^{2+}$ durch Erhöhung des pH-Wertes als Plutonat bzw. Uranat ausfällt, den Niederschlag abtrennt und das tensidhaltige Filtrat in den Flotationsprozeß rezirkuliert.

8. Verfahren nach mindestens einem der vorhergehenden Ansprüche, dadurch gekennzeichnet, daß die aufzubereitenden Lösungen neben Uran und Plutonium andere Metallionen enthalten, die in diesen Lösungen entweder keine anionischen Komplexe oder aber schwächere anionische Komplexe bilden als $UO_2^{2+}$ und/oder $Pu^{4+}$ und die keine schwerlöslichen Niederschläge mit kationischen Tensiden bilden.

9. Verfahren nach mindestens einem der vorhergehenden Ansprüche, dadurch gekennzeichnet, daß das Verfahren kontinuierlich durchgeführt wird.

## Claims

1. Process for selectively separating plutonium and uranium, characterised in that the following two steps are effected:

a) so much sulphuric acis is added to a solution containing $Pu^{4+}$ and $UO_2^{2+}$ that both $Pu^{4+}$ and $UO_2^{2+}$ form anionic sulphato complexes, then iron-(II)-sulphate or a different reducing agent is added in an amount which is sufficient to reduce the existing $Pu^{4+}$ to $Pu^{3+}$, then a cationic surfactant is added, the resultant uranium-containing precipitate is separated from its mother liquor in a manner known per se, and the uranium is obtained from the precipitate in known manner; and

b) after separation of the uranium-containing precipitate, either sodium nitrite or a peroxodisulphate or a different oxidising agent is added to the remaining mother liquor in such an amount that the $Pu^{3+}$ is thereby oxidised once more, a cationic surfactant is again added, the resultant plutonium-containing precipitate is separated in a manner known per se, and the plutonium is obtained from the precipitate.

2. Process according to claim 1, characterised in that the reduction reaction in step a) and/or the oxidation reaction in step b) are/is electronically effected.

3. Process according to claim 2, characterised in that, already in the first process step, so much cationic surfactant is added that it is also sufficient for the precipitation of plutonium in the second process step.

4. Process according to one of the preceding claims, characterised in that long-chained alkyl pyridinium salts, alkyl amines or their salts, alkyl dimethyl naphthyl ammonium salts, alkylated aryl amines or their salts, alkylated morpholine or its salts, oxalkylated pyridine or its salts, alkylated chinoline or its salts or mixtures of these compounds are used as the surfactant, the long-chained alkyl residues being straight or branched chains of 4 to 24 carbon atoms.

5. Process according to claim 4, characterised in that an N-cetyl pyridinium salt or an N-octadecyl pyridinium salt is used as the surfactant.

6. Process according to at least one of the preceding claims, characterised in that the surfactant is used in an amount equivalent to 1 to 10 times, but preferably in an amount equivalent to 1.01 to 1.10 times, relative to uranium or plutonium.

7. Process according to at least one of the preceding claims, characterised in that the separation of the uranium- or plutonium-containing precipitates is effected by a flotation process, in that a plurality of flotation cells are used therein which are connected in series and/or in parallel, in that an inert gas (such as nitrogen) or air is used for frothing purposes, in that the floated-off, precipitate-containing froth is largely dehydrated, the precipitate is suspended in a little water, the suspension is heated so that the floated-off, precipitate is suspended in a little water, the suspension is heated so that the precipitate dissolves, then the $Pu^{4+}$ or the $UO_2^{2+}$ precipitates from the solution as plutonate or uranate as a result of the pH value being increased, the precipitate is separated, and the surfactant-containing filtrate is recirculated into the flotation process.

8. Process according to at least one of the preceding claims, characterised in that, in addition to containing uranium and plutonium, the solutions to be processed contain other metal ions which form in these solutions either no anionic complexes or, however, anionic complexes which are weaker than $UO_2^{2+}$ and/or $Pu^{4+}$ and form no difficultly soluble precipitate with cationic surfactants.

9. Process according to at least one of the preceding claims, characterised in that the process is continuously effected.

## Revendications

1. Procédé de séparation sélective du plutonium et de l'uranium, caractérisé en ce qu'on réalise les deux étapes suivantes:

a) à une solution contenant du $Pu^{4+}$ comme aussi du $UO_2^{2+}$, on ajoute suffisamment d'acide sulfurique pour que $Pu^{4+}$ comme aussi $UO_2^{2+}$ forment des sulfate de fer (II) ou un autre agent réducteur en quantité suffisante pour réduire le $Pu^{4+}$ présent en $Pu^{3+}$, ensuite on ajoute un tensioactif cationique, on sépare de la solution mère, de la manière connue en soi le précipité ainsi formé contenant l'uranium et/ou extrait de la manière connue en soi l'uranium du précipité; et

b) après la séparation du précipité contenant l'uranium, on ajoute à la solution mère restante, soit du nitrite de sodium, soit un persulfate ou un autre agent oxydant en quantité telle qu'ainsi le $Pu^{3+}$ est à nouveau oxydé, on ajoute à nouveau un tensioactif cationique, on sépare de la manière connue en soi le précipité ainsi formé contenant le plutonium et on extrait de la manière connue en soi le plutonium du précipité.

2. Procédé selon la revendication 1, caractérisé en ce que la réaction de réduction de l'étape a) et/ou la réaction d'oxydation de l'étape b) est réalisée électrolytiquement.

3. Procédé selon la revendication 2, caractérisé en ce que, dans la première étape du procédé on ajoute suffisamment de tensioactif cationique pour pouvoir réaliser la précipitation du plutonium dans la deuxième étape du procédé.

4. Procédé selon l'une des revendications précédentes, caractérisé en ce qu'on utilise comme tensioactif des sels d'alkylpyridinium à longue chaîne, des alkylamines ou leurs sels, des sels d'alkyldiméthylnaphtylammonium, des arylamines alkylées ou leurs sels, de la morpholine alkylée ou ses sels, de la pyridine oxalkylée ou ses sels, de la chinoline alkylée ou ses sels, ou des mélanges de ces composés, pour les restes alkyle à longue chaîne il s'agit de chaînes linéaires ou ramifiées de 4 à 24 atomes de carbone.

5. Procédé selon la revendication 4, caractérisé en ce qu'on utilise comme tensioactif un sel de N-cétylpyridinium ou un sel de N-octadécylpyridinium.

6. Procédé selon au moins l'une des revendications précédentes, caractérisé en ce qu'on utilise le tensioactif en quantité 1 à 10 fois équivalente, de préférence cependant en quantité 1,01 à 1,10 fois équivalente, par rapport à l'uranium ou au plutonium.

7. Procédé selon au moins l'une des revendications précédentes, caractérisé en ce que la séparation des précipités contenant l'uranium ou le plutonium est réalisée par un procédé de flottation, qu'on utilise plusieurs cellules de flottation qui sont disposées en série ou en parallèle, qu'on utilise un gaz inerte (comme l'azote) ou l'air pour produire la mousse, qu'on égoutte la masse contenant le précipité, séparée par flottation, qu'on met le précipité en suspension dans un peu d'eau, qu'on chauffe la suspension de sorte que le précipité soit dissous, ensuite on précipite le $Pu^{4+}$ ou bien le $UO_2^{2+}$ de la solution par élévation du pH, sous forme de plutonate ou bien d'uranate, on sépare le précipité et recycle le filtrat contenant le tensioactif dans le processus de flottation.

8. Procédé selon au moins l'une des revendications précédentes, caractérisé en ce que les solutions à traiter contiennent, outre l'uranium et le plutonium, d'autres ions métalliques, qui dans ces solutions, soit ne forment pas de complexes anioniques, soit forment des complexes anioniques moins stables que ceux de $UO_2^{2+}$ et/ou $Pu^{4+}$ et qui ne forment pas de précipités insolubles avec les tensioactifs cationiques.

9. Procédé selon au moins l'une des revendications précédentes, caractérisé en ce que le procédé est réalisé en continu.